# FASCICULE DE BREVET EUROPEEN

(11) **EP 2 528 819 B1**
(45) Date de publication et mention de la délivrance du brevet: **01.01.2014**
(21) Numéro de dépôt: 11703816.6
(22) Date de dépôt: 20.01.2011
(51) Int. Cl.: B64D 31/04

(54) **DISPOSITIF DE COMMANDE D'UN EQUIPEMENT EMBARQUE**
VORRICHTUNG ZUR STEUERUNG EINER BORDVORRICHTUNG
DEVICE FOR CONTROLLING AN ON-BOARD APPARATUS

(30) Priorité: 25.01.2010 FR 1050458
(43) Date de publication de la demande: 05.12.2012
(73) Titulaire: SAGEM Défense Sécurité, 92100 Boulogne- Billancourt (FR)
(72) Inventeur: MAGNAN, Sébastien, F-75015 Paris (FR); WElBEL, Jean-François, F-75015 Paris (FR); GOUZE, Philippe, F-75015 Paris (FR)
(74) Mandataire: Lavialle, Bruno François Stéphane
(86) Numéro de dépôt international: PCT/EP2011/000214
(87) Numéro de publication internationale: WO 2011/089002

(56) Documents cités:
- EP-A1- 1 308 819
- DE-A1-102009 017 081
- US-A- 4 513 235

## Description

La présente invention concerne un dispositif de commande, notamment à retour d'effort, d'un équipement embarqué, par exemple un dispositif de commande d'un moteur d'aéronef qui comprend généralement un bâti sur lequel sont montées pour pivoter une roue codeuse ainsi qu'une manette principale, dite manette de gaz, agencée pour entraîner en rotation la roue codeuse. La manette de gaz est mobile par rapport au bâti entre une position de repos et une position d'actionnement maximal.

Un tel dispositif de commande est connu de US4513235, qui montre toutes les caractéristiques du préambule de la revendication 1.

L'ergonomie, le confort d'utilisation du dispositif de commande par l'opérateur, en l'occurrence par le pilote quand il s'agit d'un dispositif d'aéronef, sont des critères à prendre en compte dans la conception de ce type de dispositif. Il est en effet utile que le pilote ait un ressenti de l'effort lors de la manipulation de l'équipement, qui commande au moteur en l'occurrence, quand il déplace la manette de gaz vers la position d'actionnement maximal. C'est la raison pour laquelle il est généralement prévu que le dispositif de commande soit équipé de moyens de freinage par frottement, habituellement mécaniques, destinés à s'opposer de façon contrôlée aux mouvements imposés au dispositif de commande par l'opérateur, à la manette de gaz par le pilote par exemple.

Ces moyens de freinage par frottement peuvent être des systèmes utilisant un élément de frottement, comme une garniture de friction, qui vient frotter contre un élément solidaire du dispositif de commande, offrant ainsi une résistance à l'effort imposé par le pilote audit dispositif. Ces systèmes à frottement sont efficaces, ils donnent une bonne sensation de rendu d'effort à l'opérateur et ils sont fiables, mais ils ne sont pas dénués d'inconvénients : ils s'usent dans le temps, et doivent donc être périodiquement remplacés ou à tout le moins vérifiés. Ils ne sont pas complètement insensibles à des variations de température, ils donnent une sensation de frottement à l'opérateur qui est améliorable, et, enfin, leur réponse dépend de la vitesse d'actionnement du dispositif de commande par l'opérateur.

Le but de l'invention est de fournir un moyen améliorant le confort d'utilisation d'un dispositif de commande d'un aéronef par un opérateur, et qui puisse notamment pallier au moins un des inconvénients des systèmes existants précités, tout en garantissant le même niveau de fiabilité et de sureté.

A cet effet, on prévoit, selon l'invention; un dispositif de commande d'un équipement embarqué (par exemple sur un aéronef), tel que défini par les caractéristiques techniques de la revendication 1, ledit dispositif comportant un bâti sur lequel est articulée (au moins) une manette d'entraînement mobile entre deux positions extrêmes, ledit dispositif comprenant également un organe à friction magnétique relié à la manette (ou au moins l'une d'elles en cas de pluralité de manettes) et offrant une résistance au mouvement de celle-ci.

Utiliser un organe de friction magnétique est très avantageux à plus d'un titre. Le freinage est en effet réalisé sur le mouvement du dispositif de commande sans frottement entre pièces mécaniques, donc sans usure notable. En outre, le couple de freinage exercé par un organe à friction magnétique n'est pas, ou que très peu, sensible aux différences de température, si l'on choisit de manière appropriée les matériaux générant le champ magnétique. Par ailleurs, le couple de freinage n'est pas, ou très peu, dépendant de la vitesse d'actionnement du dispositif de commande par l'opérateur. Et, enfin, il s'est avéré que la sensation d'effort de déplacement ressentie par l'opérateur est plus agréable qu'avec les systèmes à bande de frottement, car plus souple, plus douce.

Au même titre que pour la friction mécanique, il est à noter, en outre, que cet organe de friction magnétique assure que la manette, en absence de manipulation par l'opérateur, reste bien dans la position choisie : on évite ainsi tout déplacement inopportun non voulu de la manette quand l'opérateur souhaite la maintenir dans une position donnée, même en présence de vibrations ou sous l'effet de l'accélération du véhicule sur lequel le dispositif serait monté.

Avantageusement, l'organe à friction magnétique comprend au moins deux supports en regard l'un de l'autre - notamment deux supports en regard l'un de l'autre - et portant des composants aptes à générer conjointement un champ magnétique entre lesdits supports - quand il y en a plusieurs -, ainsi qu'un rotor ferromagnétique, notamment disposé entre les supports - quand il y en a plusieurs - qui est mobile autour d'un axe et lié à la manette.

Le déplacement du rotor par rapport aux composants engendrant le champ magnétique non uniforme entraîne un parcours du cycle d'hystérésis du matériau ferromagnétique du rotor qui induit dans le rotor une dissipation d'énergie engendrant des forces s'opposant au déplacement du rotor. L'énergie dissipée dans le disque du rotor est proportionnelle au déplacement, les force s'y opposant sont donc indépendantes de la vitesse.

Selon une première variante, les supports sont des platines sensiblement perpendiculaires à l'axe de rotation, et le rotor comprend un plateau s'étendant parallèlement aux platines entre celles-ci.

On peut régler les différentes caractéristiques du champ magnétique ainsi créé par le choix, par exemple, du type de composant, de la distance entre les supports ou encore du décalage angulaire des composants de chacun des supports. Afin, notamment, d'en simplifier la conception, on préfère que le dispositif de commande soit tel que l'axe de rotation du rotor et l'axe de pivotement de la manette sont confondus.

Selon l'invention, l'organe à friction magnétique comprend un premier support qui est reçu dans un deuxième support et qui ménage avec celui-ci un espace annulaire recevant un manchon ferromagnétique formant rotor.

Les composants aptes à générer un champ magnétique peuvent être des éléments générant un champ magnétique permanent, notamment des aimants, disposés sur chacun des supports et éventuellement décalés angulairement de façon appropriée les uns par rapport aux autres.

Les composants aptes à générer un champ magnétique peuvent comprendre des éléments générant un champ magnétique variable. Il peut ainsi s'agir d'au moins une bobine montée au moins sur un des supports coopérant avec au moins un composant apte à générer un champ magnétique permanent monté sur au moins un des supports, notamment l'autre support.

L'utilisation de ces éléments procure au dispositif une structure particulièrement simple. L'utilisation d'une bobine permet de créer, pour celui qui manipule la manette du dispositif de commande, des crans par variation du champ magnétique lors du déplacement du dispositif, dont le positionnement peut être réglé pour prendre en compte, par exemple, au moins un cran définissant la position de plus faible consommation de carburant quand il s'agit d'une commande des moteurs de l'aéronef.

Comme évoqué plus haut, l'orientation et/ou l'intensité du champ magnétique créé (entre les supports) sont réglables selon la taille, le positionnement relatif angulaire des composants générant le champ magnétique, la distance entre les supports, le type de bobine etc. ...

On peut ainsi ajuster l'effort de freinage en déplaçant angulairement l'un par rapport à l'autre les supports portant les composants aptes à générer conjointement le champ magnétique, de manière à modifier la longueur de circulation des courants de Foucault dans le rotor et donc l'intensité des forces de Laplace. Ainsi, on fixe de façon permanente les aimants ou bobines aux supports, et on ne vient plus que régler le positionnement relatif des supports entre eux, ce qui est simple.

Le rotor est monté de préférence solidairement sur un arbre lui-même lié à la manette.

Par exemple, le rotor est monté solidairement sur un arbre lui-même lié à la manette par un système de transmission de mouvement, notamment du type système d'engrenage ou système de transmission par courroies, ou directement par un arbre de pivotement de la manette prolongeant l'arbre du rotor.

L'organe à friction magnétique peut comprendre un carter monté sur le bâti et délimitant un logement pour les platines ou les supports et le rotor, ce qui permet de protéger ces éléments et les composants générant le champ magnétique des chocs mécaniques, de la poussière et des particules métalliques ferromagnétiques qui pourraient se trouver libres dans l'environnement de l'organe à friction magnétique.

De préférence, le carter comprend deux parties de carter complémentaires et fixées l'une à l'autre pour délimiter le logement, chacun des supports étant monté contre l'une des parties du carter. Le rotor peut ainsi être monté sur un arbre disposé dans le logement délimité par le carter et débouchant de celui-ci par son extrémité liée à la manette.

Avantageusement alors, les parties du carter sont orientables l'une par rapport à l'autre autour de l'axe de rotation du rotor, ce qui permet de régler l'effort de freinage.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique latérale d'un dispositif de commande d'un équipement d'un aéronef équipé d'un organe de friction magnétique selon une première variante de l'invention ;
- la figure 2 est une vue schématique latérale d'un dispositif de commande d'un équipement d'un aéronef équipé d'un organe de friction magnétique selon une seconde variante de l'invention ;
- la figure 3 est une vue schématique éclatée d'un organe de friction magnétique conforme à un premier mode de réalisation de l'invention ;
- La figure 4 est une vue schématique en coupe axiale d'un deuxième mode de réalisation de l'organe de friction magnétique selon l'invention ;
- la figure 5 est une vue schématique en éclaté de l'organe de friction magnétique selon la figure 4 ;
- la figure 6 est une vue schématique éclatée d'un troisième mode de réalisation de l'organe de friction magnétique selon l'invention.

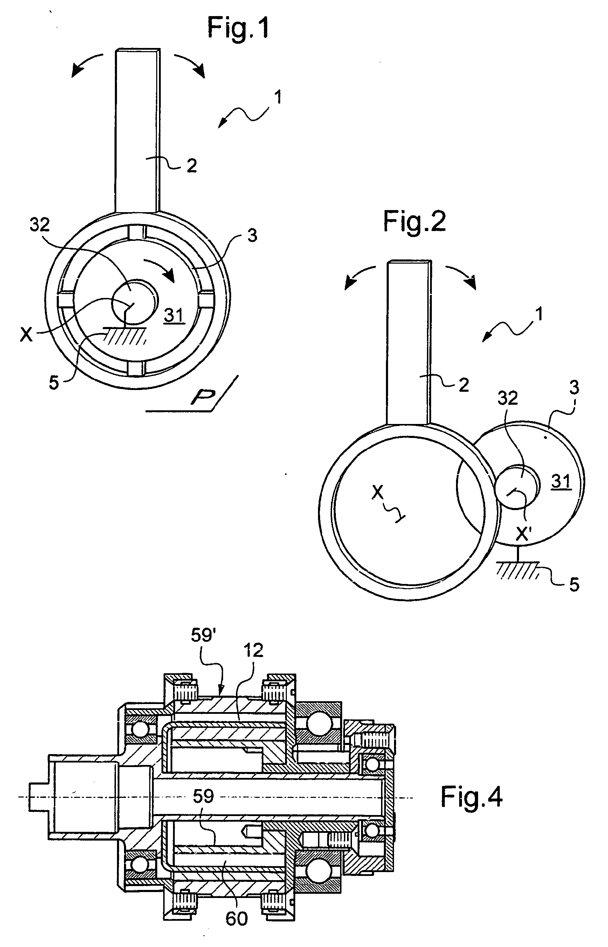

Les figures, et notamment les figures 1 et 2, sont très schématiques et ne respectent pas nécessairement l'échelle entre les différents éléments représentés, afin d'en faciliter la lecture. Les références pour un même élément sont conservées dans l'ensemble des figures.

Le dispositif de commande des gaz auquel s'applique l'invention et décrit dans les modes de réalisation suivants est agencé pour commander la poussée d'un moteur d'aéronef à l'aide d'une manette de gaz.

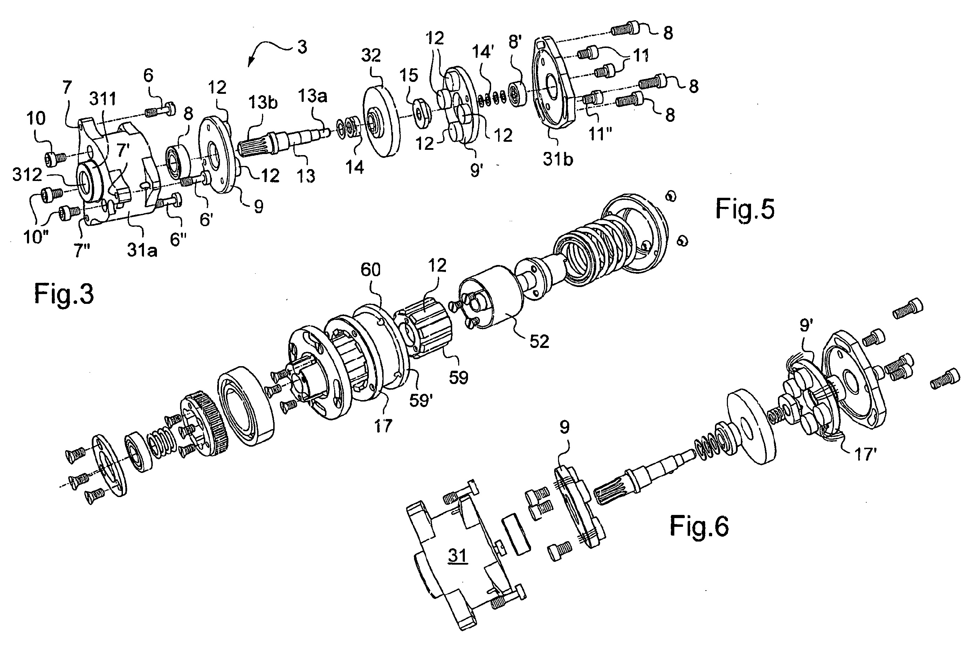

La figure 1 représente un dispositif de commande 1 selon une première variante comprenant une manette de gaz 2 apte à être manoeuvrée manuellement entre deux positions extrêmes par pivotement autour d'un axe X par rapport à un bâti symbolisé par les hachures 5. Le dispositif comprend un organe à friction magnétique 3, qui comprend, comme détaillé plus loin à l'aide des figures 3 et suivantes, un carter 31 délimitant un logement comprenant des platines portant des composants générant le champ magnétique et un rotor ferromagnétique 32. Le carter 31 est lié à la manette de gaz 2 elle-même, tandis que le rotor 32 est lié au bâti 5 de la manette de gaz 2. Dans ce cas de figure, la structure 2,3 est compacte : l'axe de rotation du rotor 32 est confondu avec l'axe de rotation X de la manette 2 et l'organe de friction 3 se trouve sensiblement selon un plan médian P vertical (tel que représenté à la figure) qui est le même que celui de la manette de gaz 2.

La figure 2 représente une deuxième variante, où, cette fois, le carter 31 se trouve lié au bâti 5 de la manette de gaz 2, et où le rotor 32 est relié à la manette de gaz 2 par une liaison à engrenage. Les axes de rotation de la manette de gaz 2 et du rotor 32 sont toujours parallèles (axes X et X'), mais sont ici décalés l'un par rapport à l'autre.

La figure 3 détaille un organe de friction 3 selon un premier mode de réalisation de l'invention. Il comprend un carter 31 où logent deux platines 9,9' présentant la forme de disques percés en leur centre, de tailles sensiblement identiques et disposées autour d'un axe central commun. Ces deux platines 9,9' comportent chacune sur leurs faces en vis-à-vis quatre aimants 12. Un rotor 32 en composé ferromagnétique est monté solidairement à un arbre 13 à l'aide de rondelles 14 et d'un écrou 15 qui vient se visser sur l'arbre par son extrémité 13a. Les deux platines 9 et 9' sont également traversées par l'arbre 13, dont l'autre extrémité 13b, une fois montée, débouche hors du carter 31 par l'ouverture 312 qui est pratiquée sur la paroi de fond de la partie 31a du carter et qui reçoit le roulement 8. Le carter 31 est composé d'une première partie 31a définissant un logement et d'une seconde partie 31b venant fermer ce logement en se vissant sur la partie 31a à l'aide de vis 8 traversant les deux parties. L'ensemble du carter 31 est destiné à être fixé au bâti (non représenté) par des vis 6,6',6'' au travers de fûts de vissage 7,7',7'' répartis régulièrement sur le pourtour extérieur de la partie 31a du carter, tandis que lesdites vis passent par des trous oblongs s'étendant en arc de cercle sur la partie 31b. La forme des trous recevant les vis 6,6',6'' dans la partie de carter 31b autorise un débattement angulaire de ladite partie par rapport à la partie de carter 31a autour de l'axe X et ainsi un réglage angulaire des aimants 12 de la platine 9 par rapport à ceux de la platine 9'. Ce réglage de l'orientation angulaire permet de régler l'effort de freinage. Le carter 31 délimite un logement comprenant, au niveau de la paroi de fond de la partie 31a, une cavité cylindrique ouverte 311 apte à loger un roulement 8. La platine 9 est vissée à la partie 31a du carter 31 à l'aide des vis 10,10',10'' passant par des ouvertures pratiquées à cet effet sur la paroi de fond de la partie 31a pour être reçues dans des puits taraudés ménagés en correspondance dans la partie annulaire de la platine. De manière analogue, la platine 9' est vissée au couvercle 31b du carter à l'aide de vis 11,11', 11''. L'extrémité 13a de l'arbre est montée à pivotement dans le couvercle 31b du carter par l'intermédiaire d'un roulement 8'.

Les figures 4 et 5 représentent un organe de friction selon un deuxième mode de réalisation de l'invention. Ici, il n'y a plus de paire de platines, mais un premier support 59 qui est reçu dans un deuxième support 59' tubulaire et qui ménage avec celui-ci un espace annulaire 60 recevant un manchon ferromagnétique formant rotor 52. Le premier support 59 est pourvu d'aimants 12, tandis que le deuxième support 59' est, lui, pourvu de bobines 17. Le montage de ce dispositif est analogue à celui du dispositif du premier mode de réalisation.

La figure 6 représente un organe de friction selon un troisième mode de réalisation de l'invention, proche du premier mode de réalisation représenté en figure 3. La différence réside dans le fait que des bobines 17' sont associées à la platine 9'.

L'utilisation de bobines 17, 17' permet de générer des crans ressentis par le pilote lors de la manoeuvre de la manette de gaz, crans dont on peut régler la course en fonction de divers paramètres tels que la charge de l'avion ou la distance à parcourir par celui-ci. On peut ainsi prévoir un cran correspondant à une position de consommation minimale de carburant.

Bien entendu, l'invention n'est pas limitée aux modes de réalisations décrits mais englobe toute variante entrant dans le champ de l'invention telle que définie par les revendications.

En particulier, d'autres applications sont envisageables pour le dispositif de commande de l'invention qui n'est nullement cantonnée à la commande d'un moteur d'aéronef.

Le montage du dispositif de commande dans un carter, comme dans le premier mode de réalisation est facultatif, de même que la possibilité d'un réglage de l'effort résistant.

## Revendications

1. Dispositif de commande (1) d'un équipement embarqué, ledit dispositif comportant un bâti (5) sur lequel est articulée au moins une manette (2) d'entraînement mobile entre deux positions extrêmes, et un organe à friction magnétique (3), relié à la manette (2), offrant une résistance au mouvement de celle-ci, l'organe à friction magnétique (3) comprenant au moins deux supports (9,9', 59, 59') portant des composants (12, 17,17') aptes à générer conjointement un champ magnétique, notamment entre lesdits supports, et un rotor ferromagnétique (32), notamment disposé entre les supports, qui est mobile autour d'un axe (X) et lié à la manette (2), **caractérisé en ce qu'**on ajuste le champ magnétique en déplaçant angulairement l'un par rapport à l'autre les supports (9,9') portant les composants (12, 17,17') aptes à générer conjointement le champ magnétique.

2. Dispositif de commande (1) selon la revendication précédente, **caractérisé en ce que** les supports sont des platines (9,9') sensiblement perpendiculaires à l'axe de rotation, et le rotor (32) comprend un plateau s'étendant parallèlement aux platines entre celles-ci.

3. Dispositif de commande (1) selon la revendication 2, **caractérisé en ce que** l'organe à friction magnétique (3) comprend un premier support (59) qui est reçu dans un deuxième support (59') et qui ménage avec celui-ci un espace annulaire (60) recevant un manchon ferromagnétique formant rotor (52).

4. Dispositif de commande (1) selon la revendication 2, **caractérisé en ce que** l'axe de rotation (X') du rotor (32) et l'axe de pivotement (X) de la manette (2) sont confondus ou parallèles entre eux ou autres.

5. Dispositif de commande (1) selon la revendication 2, **caractérisé en ce que** les composants aptes à générer un champ magnétique comprennent des éléments générant un champ magnétique permanent (12) disposés sur chacun des supports (9,9', 59,59') et décalés angulairement les uns par rapport aux autres.

6. Dispositif de commande (1) selon la revendication 2, **caractérisé en ce que** les composants aptes à générer un champ magnétique comprennent des éléments générant un champ magnétique variable (17,17'), notamment au moins une bobine montée sur au moins un des supports (9,9', 59,59') coopérant avec au moins un composant apte à générer un champ magnétique permanent (12) monté sur au moins un des supports.

7. Dispositif de commande (1) selon l'une des revendications précédentes, **caractérisé en ce que** l'orientation et/ou l'intensité du champ magnétique créée par l'organe de friction magnétique (3) sont réglables.

8. Dispositif de commande (1) selon la revendication 2, **caractérisé en ce que** le rotor (32) est monté solidairement sur un arbre (13) lui-même lié à la manette (2).

9. Dispositif de commande (1) selon la revendication 2, **caractérisé en ce que** le rotor (32) est monté solidairement sur un arbre (13) lui-même lié à la manette (2) par un système de transmission de mouvement, notamment du type système d'engrenage ou système de transmission par courroies, ou directement par un arbre de pivotement de la manette prolongeant l'arbre du rotor.

10. Dispositif de commande (1) selon la revendication 2, **caractérisé en ce que** l'organe à friction magnétique (3) comprend un carter (31) monté sur le bâti (5) et délimitant un logement pour les supports (9,9', 59,59') et pour le rotor (32,52).

11. Dispositif de commande (1) selon la revendication 10, **caractérisé en ce que** le carter (31) comprend deux parties de carter complémentaires (31a, 31b) et fixées l'une à l'autre pour délimiter un logement, chacun des supports (9,9', 59,59') étant monté contre l'une des parties du carter.

12. Dispositif de commande (1) selon la revendication 10, **caractérisé en ce que** le rotor (32) est monté sur un arbre (13) disposé dans le logement délimité par le carter (31) et débouchant de celui-ci par son extrémité (31a) liée à la manette (2).

13. Dispositif de commande (1) selon la revendication 12, **caractérisé en ce que** les parties (31a,31b) du carter (31) sont orientables l'une par rapport à l'autre autour de l'axe de rotation du rotor (32,52).

14. Dispositif de commande (1) selon l'une des revendications précédentes, **caractérisé en ce que** ledit dispositif de commande est un dispositif de commande de poussée d'un moteur d'aéronef.

## Patentansprüche

1. Vorrichtung (1) zur Steuerung einer Bordausrüstung, wobei die Vorrichtung einen Rahmen (5) umfasst, an dem mindestens ein zwischen zwei Endpositionen beweglicher Antriebshebel (2) angelenkt ist, sowie ein mit dem Hebel (2) verbundenes Magnetreibungselement (3), das einen Widerstand gegenüber der Bewegung des Hebels bietet, wobei das Magnetreibungselement (3) mindestens zwei Träger (9,9', 59,59') umfasst, die Komponenten (12, 17,17') tragen, die dazu geeignet sind, gemeinsam ein Magnetfeld zu erzeugen, insbesondere zwischen den genannten Trägern, sowie einen ferromagnetischen Rotor (32), der insbesondere zwischen den Trägern angeordnet ist und der um eine Achse (X) beweglich und mit dem Hebel (2) verbunden ist, **dadurch gekennzeichnet, dass** das Magnetfeld dadurch eingestellt wird, dass die Träger (9,9'), die die zur gemeinsamen Magnetfelderzeugung geeigneten Komponenten (12, 17,17') tragen, gegeneinander in Winkelrichtung verdreht werden.

2. Steuervorrichtung (1) nach dem vorhergehenden Anspruch, **dadurch gekennzeichnet, dass** die Träger Platinen (9,9') sind, die im Wesentlichen senkrecht zur Drehachse stehen, und der Rotor (32) eine Platte umfasst, die sich parallel zu den Platinen zwischen denselben erstreckt.

3. Steuervorrichtung (1) nach Anspruch 2, **dadurch gekennzeichnet, dass** das Magnetreibungselement (3) einen ersten Träger (59) umfasst, der in einem zweiten Träger (59') aufgenommen ist und der mit demselben einen ringförmigen Raum (60) ausbildet, der eine den Rotor (52) bildende ferromagnetische Hülse aufnimmt.

4. Steuervorrichtung (1) nach Anspruch 2, **dadurch gekennzeichnet, dass** die Drehachse (X') des Rotors (32) und die Schwenkachse (X) des Hebels (2) zusammenfallen oder parallel zueinander oder zu anderen sind.

5. Steuervorrichtung (1) nach Anspruch 2, **dadurch gekennzeichnet, dass** die die zur Magnetfelderzeugung geeigneten Komponenten ein Dauermagnetfeld erzeugende Elemente (12) umfassen, die an jedem der Träger (9,9', 59,59') angeordnet und zueinander in Winkelrichtung versetzt sind.

6. Steuervorrichtung (1) nach Anspruch 2, **dadurch gekennzeichnet, dass** die die zur Magnetfelderzeugung geeigneten Komponenten ein veränderliches Magnetfeld (17,17') erzeugende Elemente umfassen, insbesondere mindestens eine an mindestens einem der Träger (9,9', 59,59') gelagerte Spule, die mit mindestens einer zur Erzeugung eines Dauermagnetfelds (12) geeigneten Komponente zusammenwirkt, die an mindestens einem der Träger gelagert ist.

7. Steuervorrichtung (1) nach einem der vorhergehenden Ansprüche, **dadurch gekennzeichnet, dass** die Ausrichtung und/oder die Intensität des durch das Magnetreibungselement (3) erzeugten Magnetfeldes einstellbar sind.

8. Steuervorrichtung (1) nach Anspruch 2, **dadurch gekennzeichnet, dass** der Rotor (32) fest auf einer Welle (13) gelagert ist, die selbst mit dem Hebel (2) verbunden ist.

9. Steuervorrichtung (1) nach Anspruch 2, **dadurch gekennzeichnet, dass** der Rotor (32) fest auf einer Welle (13) gelagert ist, die selbst mit dem Hebel (2) über ein Bewegungsübertragungssystem, insbesondere der Art Getriebesystem oder Riemenübertragungssystem verbunden ist, oder direkt über eine die Welle des Rotors verlängernde Drehwelle des Hebels.

10. Steuervorrichtung (1) nach Anspruch 2, **dadurch gekennzeichnet, dass** das Magnetreibungselement (3) ein an dem Rahmen (5) gelagertes Gehäuse (31) umfasst, das eine Aufnahme für die Träger (9,9', 59,59') und für den Rotor (32, 52) begrenzt.

11. Steuervorrichtung (1) nach Anspruch 10, **dadurch gekennzeichnet, dass** das Gehäuse (31) zwei komplementäre Gehäuseteile (31a, 31b) umfasst, die aneinander befestigt sind, um eine Aufnahme zu begrenzen, wobei jeder der Träger (9,9', 59,59') an einem der Teile des Gehäuses gelagert ist.

12. Steuervorrichtung (1) nach Anspruch 10, **dadurch gekennzeichnet, dass** der Rotor (32) auf einer Welle (13) gelagert ist, die in der von dem Gehäuse (31) begrenzten Aufnahme angeordnet ist und die über das mit dem Hebel (2) verbundene Ende (31 a) des Gehäuses aus demselben austritt.

13. Steuervorrichtung (1) nach Anspruch 12, **dadurch gekennzeichnet, dass** die Teile (31 a, 31b) des Gehäuses (31) relativ zueinander um die Drehachse des Rotors (32, 52) ausrichtbar sind.

14. Steuervorrichtung (1) nach einem der vorhergehenden Ansprüche, **dadurch gekennzeichnet, dass** die genannte Steuervorrichtung eine Schubsteuervorrichtung eines Flugzeugmotors ist.

## Claims

1. A control device (1) for controlling on-board equipment, said device comprising a mount (5) having at least one drive lever (2) hinged thereto that is movable between two extreme positions, and a magnetic friction member (3) that is connected to the lever (2) and that opposes resistance to movement thereof, the magnetic friction member (3) having at least two supports (9, 9'; 59, 59') carrying components (12, 17, 17') suitable for acting together to generate a magnetic field, in particular between said supports, and a ferromagnetic rotor (32), which rotor is arranged in particular between the supports, is movable about an axis (X), and is connected to the lever (2), the device being **characterized in that** the magnetic field is adjusted by moving the supports (9, 9') carrying the components (12, 17, 17') that are suitable for acting together to generate the magnetic field angularly relative to each other.

2. A control device (1) according to the preceding claim, **characterized in that** the supports are plates (9, 9') substantially perpendicular to the axis of rotation, and the rotor (32) comprises a plate extending parallel to said plates and lying between them.

3. A control device (1) according to claim 2, **characterized in that** the magnetic friction member (3) comprises a first support (59) that is received in a second support (59') and that co-operates therewith to define an annular space (60) receiving a rotor-forming ferromagnetic sleeve (52).

4. A control device (1) according to claim 2, **characterized in that** the axis of rotation (X') of the rotor (32) and the pivot axis (X) of the lever (2) coincide or are parallel to each other, or are arranged otherwise.

5. A control device (1) according to claim 2, **characterized in that** the components suitable for generating a magnetic field comprise elements (12) generating a permanent magnetic field that are arranged on each of the supports (9, 9'; 59, 59') and that are angularly offset relative to one another.

6. A control device (1) according to claim 2, **characterized in that** the components suitable for generating a magnetic field comprise elements (17, 17') for generating a variable magnetic field, in particular at least one coil mounted on at least one of the supports (9, 9'; 59, 59') and co-operating with at least one component suitable for generating a permanent magnetic field (12) mounted on at least one of the supports.

7. A control device (1) according to any preceding claim, **characterized in that** the orientation and/or the intensity of the magnetic field created by the magnetic friction member (3) is/are adjustable.

8. A control device (1) according to claim 2, **characterized in that** the rotor (32) is secured to a shaft (13) that is itself connected to the lever (2).

9. A control device (1) according to claim 2, **characterized in that** the rotor (32) is secured to a shaft (13) that is itself connected to the lever (2) by a movement-transmitter system, in particular of the type comprising a gear system or a belt transmission system, or directly by a pivot shaft of the lever extending the shaft of the rotor.

10. A control device (1) according to claim 2, **characterized in that** the magnetic friction member (3) comprises a casing (31) mounted on the mount (5) and defining a housing for the supports (9, 9'; 59, 59') and for the rotor (32, 52).

11. A control device (1) according to claim 12, **characterized in that** the casing (31) comprises two complementary casing portions (31a, 31b) that are fastened to each other to define a housing, each of the supports (9, 9'; 59, 59') being mounted against one of the portions of the casing,

12. A control device (1) according to claim 12, **characterized in that** the rotor (32) is mounted on a shaft (13) arranged in the housing defined by the casing (31) and projecting therefrom via its end (31a) connected to the lever (2).

13. A control device (1) according to claim 14, **characterized in that** the portions (31a, 31b) of the casing (31) are angularly positionable relative to each other about the axis of rotation of the rotor (32, 52).

14. A control device (1) according to any preceding claim, **characterized in that** said control device is a device for controlling the thrust of an aircraft engine.
